Europäisches Patentamt

European Patent Office

Office européen des brevets

(11) Publication number: **0 261 278 B1**

## EUROPEAN PATENT SPECIFICATION

(45) Date of publication of patent specification: **18.03.92**

(51) Int. Cl.⁵: **F27B 9/10**, F27D 7/04, F26B 21/00, F27B 5/16

(21) Application number: **86117893.7**

(22) Date of filing: **22.12.86**

(54) **Heating apparatus.**

(30) Priority: **13.09.86 JP 216141/86**

(43) Date of publication of application:
**30.03.88 Bulletin 88/13**

(45) Publication of the grant of the patent:
**18.03.92 Bulletin 92/12**

(84) Designated Contracting States:
**DE FR GB IT**

(56) References cited:
**DE-A- 3 321 554        FR-A- 2 099 954**
**FR-A- 2 436 350        FR-A- 2 476 293**
**GB-A- 1 274 358        GB-A- 2 152 199**

(73) Proprietor: **TOKAI CHEMICAL INDUSTRIES, LTD.**
**4203-1, Shimokosuge Kitatoyama**
**Komaki City Aichi Prefecture(JP)**

(72) Inventor: **Matsuda, Tomonori**
**8-7-1, Chuoudai**
**Kasugai City Aichi Pref.(JP)**
Inventor: **Minamida, Tsugio**
**72-24, Shimobudai**
**Inuyama City Aichi Pref.(JP)**

(74) Representative: **Grams, Klaus Dieter, Dipl.-Ing. et al**
**Patentanwaltsbüro Tiedtke-Bühling-Kinne-Grupe-Pellmann-Grams-Struif Winter-Roth**
**Bavariaring 4**
**W-8000 München 2(DE)**

## Description

This invention relates to an apparatus for heat treating a work item by a hot blast according to the preamble of claim 1.

Conventionally, it is known there are two types of heating apparatus which use the hot blast as a heating medium. One is of an internal heating type in which a heat source is disposed inside the heating chamber of a furnace, and the other is an external heating type in which the hot blast is fed into the working space from the outside heat source. A burner or a heater is normally employed as the heat source for both types.

In a conventional heating apparatus of the same type as known from FR-A-2 476 293 a heated gas is accelerated by a circulating fan and directed into the heating chamber of the furnace by means of several nozzles. As a result the heated gas is supplied to an entire work item. Such an conventional heating apparatus, however, did not allow a spot heating of any particular portion of the work item. Thus, when the work item has a complicated shape or a certain portion thereof is thicker than the rest, difference in heat capacity becomes large, resulting in a various temperature distribution at the surface of the work item.

It is an object of the present invention to provide a heating apparatus which is capable to heat individual portions of the work item at determined spots; moreover, this "spot heating" shall be effected with as high as possible an efficiency.

This object is achieved by the means and measures in the characterizing part of claim 1.

According to the present invention, the heating apparatus comprises a furnace body having a chamber to maintain a heated gas like air, a means for holding a work item at a given position in the furnace chamber and at least one compressed gas supplying pipe which is introduced in the furnace chamber. The compressed gas supplying pipe characteristically includes at least one spot heating means extending into the furnace chamber for spouting the compressed gas from nozzle means and leading it in the particular direction under an action of the gas spouting energy. Accordingly the compressed gas is supplied to the furnace chamber from outside via the supplying pipe. By the adjustable nozzle means the compressed gas is directed to determined spots of the work item; via concentrically arranged guid means the heated gas in the furnace chamber is "carried over".

The furnace can be in the shape of box, cell, vertical and the like. This shape of the furnace can be selected optionally in accordance with shape, material or the like of the work item to be processed.

In terms of the heating system of the furnace body, the apparatus of the present invention can be either inner or external one. The furnace body is constructed to allow the hot blast and radiant heat to render heat energy to the work item in the furnace chamber.

It is preferable that the hot blast may be circulated such that the gas cooled down may be heated again during the circulation. In the case of external heating system, it goes without saying that a separate heated gas supplying section be disposed in combination with the furnace body. The separate heated gas supplying section can be constituted by a heat source and a duct which communicates the heat source with the furnace body.

To minimize energy loss, it is desirable that the heated gas emitted by the heat source be circulated through the duct. This circulation can be made such that after the heated gas has been transferred to the furnace chamber of the furnace body, an exhaust gas cooled down be reentered into the heat source to be heated again for recirculation.

The means for holding the work item functions to support the work item at a predetermined position in the furnace chamber. This holding means can be any means as long as it holds the work item at a proper position. For example, it may be of the type in which the entry and exit of the work item is made one by one to and from the furnace chamber of the furnace body.

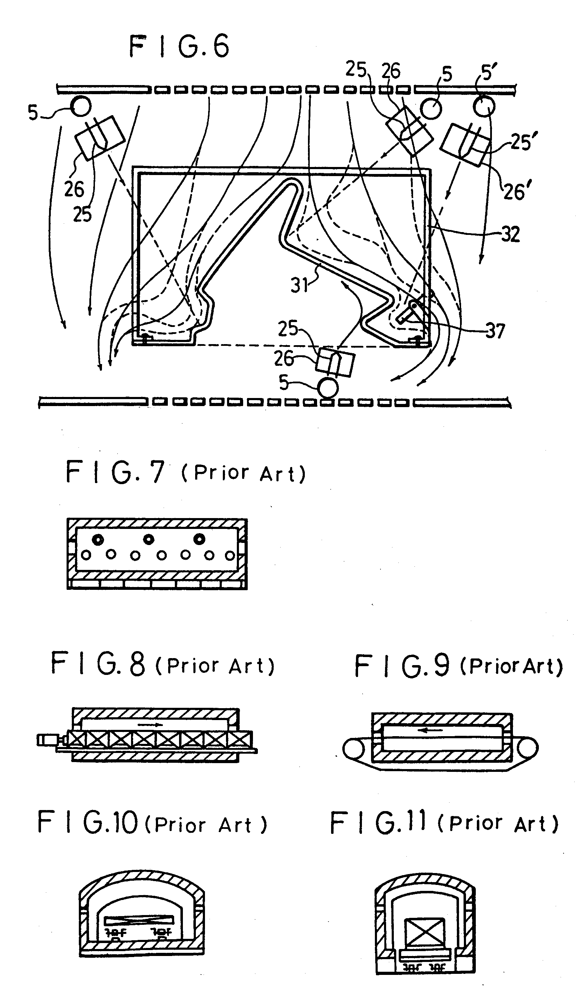

As shown in Fig.7, the holding means may comprise a plurality of rollers on which work items are conveyed in sequence, or as shown in Fig.8, the holding means may be in the form of rails. That is, the holding means may comprise conveyer rollers as shown in Fig.7, or rails as shown in Fig.8, or endless belt means as shown in Fig.9, or a combination of guide rails and trucks as shown in Figs.10 and 11.

It is preferable that the furnace body and the holding means be provided with a sensor to detect type or model of the work item.

The compressed gas supplying pipe transfers a compressed gas to the furnace chamber and guides it in the heating chamber in the predetermined direction so that the particular portion of the work item can be heated efficiently. Usually, a plurality of pipes are provided along the ceiling, the wall, the floor or the like within the furnace chamber. This compressed gas supplying pipe communicates with a compressor generating the compressed gas. The compressor may be a usual air compressor, and the compressed gas may be air or gas with a considerably reduced temperature like the gas exhausted from the furnace body.

It is preferable that air be used because it does not exert any adverse affection on the compressor. In this case, there is no need that air is a heated one with high temperature. However, it is rather desirable that the compressed gas itself has high temperature. Accordingly, it is possbile to use the compressed gas which may be heated for high temperature while it is retained in the pipe.

The spot heating means comprise nozzle means which communicate with the compressed gas supplying pipe to spout the compressed gas. It is desirable that the spot heating means comprise a nozzle and a guide means to lead the spouted gas in the given direction. The connection between the spot heating means and the compressed gas supplying pipe is made by means of a flexible tube such that position or direction of the nozzle may be changed freely. At least one spot heating means is provided on the compressed gas supplying pipe. Namely, some of the pipes may have only one spot heating means and some are provided with a plurality of spot heating means. The function of the spot heating means is similar to that of a known aspirater. The spouting energy of the compressed gas is used to orient the surrounding heated gas to a given direction, whereby thus oriented heated gas blows against the particular portion of the work item.

In general, in the case of heating apparatus which uses the hot blast, a boundary layer having a large heat transfer resistance is formed on the surface of the work item. Because of relatively a small heat energy of the gas, heating efficiency of the gas is much poorer than that of liquid heating.

Meanwhile, the spot heating device of the present invention blows off the boundary region by means of hot gas enegized to flow in the constant direction, and supplies sequentially a renewed heated gas with high temperature to the predermined portion of the work item.

By virtue of this arrangement, it is possible to heat only the given portion rapidly and efficiently. It is desirable that a number of compressed gas supplying pipes each having at least one spot heating means are provided in the furnace chamber, and that the operation of the spot heating means be controlled freely by units of one compressed gas supplying pipe. For example, control is conducted such that the hot gas is spouted from only the selected spot heating means of the selected pipe.

Electromagnetic valves may be employed for control means, but in view of their durability, they should be provided at a location on the compressed gas supplying pipe where a thermal impact is as little as possible. With this arrangement of control means, the heating mode can be adjusted to type of work items so that they are heated with high efficiency. The work item to be processed is not limited to any particular one, but especially, the heating apparatus of the present invention can be used in a heating step of a slush molding process. Especially, if a provision is made such that a wide variety of slush molds each having a complicated and different shape can be used, that would suffice the purpose of the present invention. In this case, it is desirable that some identification mark or configuration (for example, a protrusion diposed on a particular portion) for each slush mold be provided. Such identification mark or configuration may be detected by a sensor positioned on the furnace body or assembled together with the work item holding means. Then, based on the result of such mark or configuration detection, electromagnetic means of selected compressed gas supplying pipe may be caused to control one or a plurality of spot heating means attached to the pipe so that the heated gas is spouted all at once. Also, it is preferable that a microcomputer, a program controller and the like be used to control a part or the entire of heating operation such as heating hours, gas supplying hours, transfer of work items, etc. in the work space of the furnace body. According to the apparatus of the present invention, as described above, when introduced into the furnace chamber, the work item is held by the holding means and heated in all by the heated gas retained in the heating chamber. At the same time, a blast of a hot gas spouted from the selected spot heating means is directed to the predetermined portion of the work item in order to heat it rapidly, resulting in high efficient heating of such given portion.

Fig.1 is a partly broken front view of a heating apparatus of an embodiment according to the present invention.

Fig.2 is a partly broken side view of a heating apparatus of an embodiment according to the present invention.

Fig.3 is a perspective illustration of the entire spot heating means of the embodiment.

Fig.4 is a top view of the spot heating means of the embodiment.

Fig.5 is a vertical-sectional view of the spot heating means of the embodiment.

Fig.6 is a vertical-sectional view of the slush mold which is used as a work item of the heating apparatus of the embodiment according to the present invention. This Figure illustrates particularly orientation of the spot heating means in the slush mold box.

Fig.7 - 11 show different kind conventional holding devices.

While the present invention shall now be described with reference to the preferred embodiment shown in the accompanying drawings, the intention is not to limit the invention only to the particular embodiment but rather to include all modifications, alternatives and equivalent arrangements possible within the scope of appended claims.

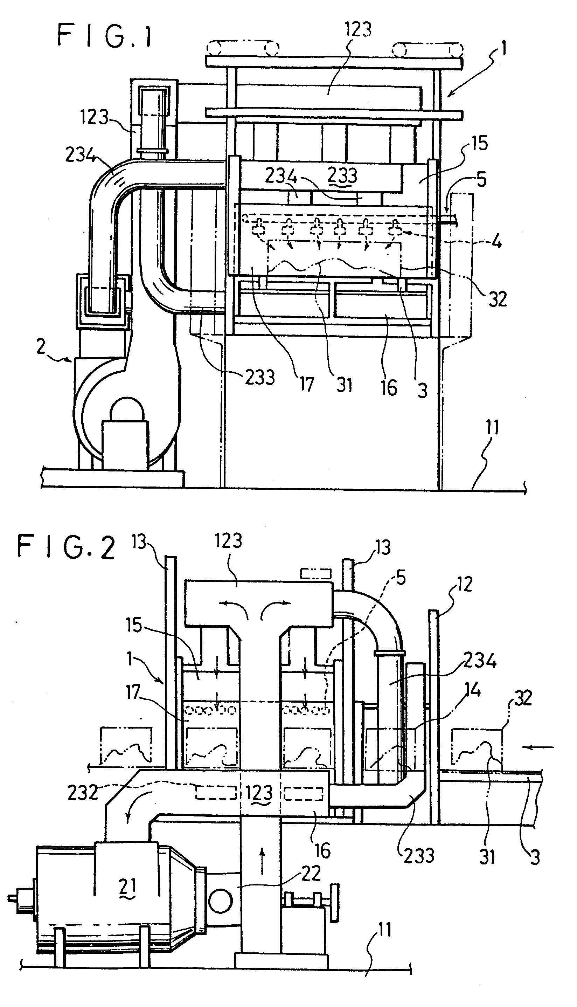

Referring now to the drawings, particularly to Fig.1 and Fig.2, a furnace of external heating type mainly comprises a furnace body 1, a hot gas supplying source 2, a rail-shaped holding device 3, and a compressed gas supplying pipe 5 with spot heating means 4. The furnace body 1 is fixed on a base 11 and has a box-shape, measuring 2.6 m (Length), 2.8 m (Width), 3.5 m (Height). Adjacent to the entry of the furnace body 1 is provided a preheating chamber 14. A door 12 at the entrance to the preheating chamber 14 and a door 13 at the entrance to the furnace body 1 are provided respectively. Provided inside the furnace body 1 are a high temperature gas chamber 15 near the ceiling, a heating chamber 17 in the middle and a low temperature gas chamber 16 at the bottom. Partition plates (not shown) having a number of slits are placed between the high temperature gas chamber 15 and heating chamber 17, and between the heating chamber 17 and the low temperature gas chamber 16, respectively. By virtue of this contruction, the heated gas flows from the high temperature gas chamber 15 to the heating chamber 17, and from the heating chamber 17 to the low temperature gas chamber 16 vertically in parallel. The heated gas supplying source (not shown) comprises a combustion chamber 21 and an air blast portion 22. The combustion chamber 21 has a burner (now shown) in the center, and receives a supply of fresh air from the rear of the burner. The gas cooled down in the low temperature gas chamber 16 reenters into the combustion chamber 21 through the inlet on its peripheral portion to be mixed with combustion gas with high temperature. Inside the air blast portion 22 at the other end of the combustion chamber 21 is incorporated a fan (not shown) which functions to transfer the mixed gas to a main air transfer duct 123.

In addition to the main air transfer duct 123, a main exhaust gas transfer duct 232 is connected between the low temperature gas chamber 16 of the furnace body 1 and the combustion chamber 21. Connected to the main air transfer duct 123 and the main exhaust gas transfer duct 232 are a sub air transfer duct 233 and a sub exhaust gas transfer duct 234. Each of these sub ducts 233 and 234 is connected to the preheating chamber 14. A plurality of compressed gas supplying pipes 5 are arranged side by side in a group at the upper part of the heating chamber 17. One end of each of the pipes 5 is connected to a bypass (not shown) which communicates with a trunk gas pipe (not shown) which in turn is coupled with an air compressor (not shown). Each of the compressed gas supplying pipes 5 is provided with several spot heating means 4 which are controlled in a group by the central means mentioned above.

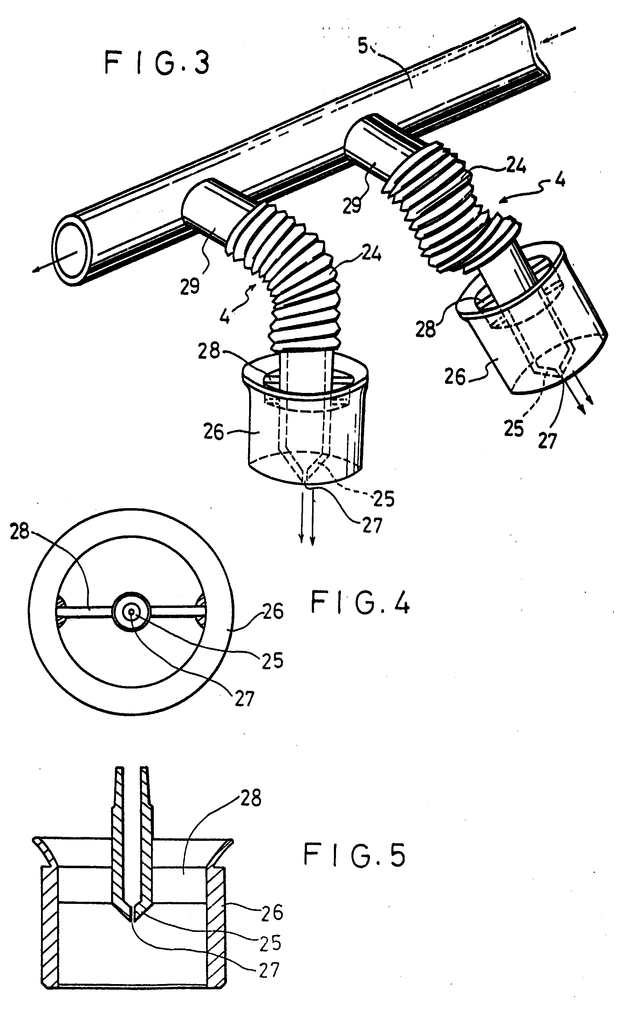

The details of the spot heating devices 4 are explained with reference to Figs.3, 4 and 5. Each of the spot heating means is constituted by a flexible bellow 24 which communicates with the compressed air supplying pipe 5 through a connecting pipe 29, a nozzle means 25 attached to the forward end of the bellow 24 and a tubular guide member 26 surrounding the nozzle means 25 (nozzle 25).

As shown in Fig.4 which is a top view of the spot heating means 4 and in Fig.5 which is a vertical-sectional view thereof, the nozzle 25 has, at its tip end, a pore 27 through which the compressed gas is spouted. The tubular guide means 26 is welded to the peripheral portion of the nozzle 25 through a rib 28. Thus, the tubular guide means 26 is integral with the nozzle 25.

The adjustment of the nozzle orientation of the nozzle 25 is made by the flexible bellow 24. As shown in Figs.1 and 2, the means for holding the work item 3 is a chain-like endless driving device on which a slush mold 31 (work item 31) is placed at a predermined interval. The endless driving device is intermittently driven. Namely, it stops for some seconds, then moves by a constant distance (some cm) and repeats the operation.

The furnace including the preheating chamber 14 can accommodate three work items (slush mold) at a time. At this point, it is to be appreciated that the preheating chamber 14 has no spot heating means 4. The heating chamber 17 is constituted to accommodate two work items. The heating is conducted in two steps. For each of the heating steps, the spot heating means 4 is operatively arranged in the heating chamber 17.

When a slush mold of a certain type is supplied for heat treatment, a sensor detects the type of the slush mold at the entrance to the heating chamber 17, and outputs a signal to supply a compressed gas to a selected compressed gas supplying pipe which is equipped with spot heating means suitable to heat the supplied slush mold.

Fig.6 shows a vertical-sectional view of work item to be heated by the heating apparatus of the present invention. The work item comprises a slush mold 31 and a frame means 32 The slush mold 31 is made from nickel with a thickness of about 4 mm and has relatively a complicated shape. The marginal portion of opened side of this slush mold 31 is provided with a flange-like member. The frame means 32 has a frame at a position corresponding to each edge of the rectangular parallel-piped. The work item receives the hot blast from the upperpart (see Fig.6) and is heated from the reverse side. The frame means 32 does not interfere in any way the blow of the hot blast, so that the slush mold 31 can directly be heated by the hot blast.

The general flow of heated gas is as shown in the solid line in Fig.6. A nozzle 25 oriented to the convex portion of the slush mold 31 spouts compressed air, thus allowing the hot blast to be guided in the direction of dotted line in Fig.6. In this manner, the hot blast is rendered concentrically to the convex portion of the slush mold 31 for heating it efficiently.

Further, depending on the shape of the portion to be heated, there is a case where a guide means 37 attached to the frame means 32 is jointly used to direct the blow of the heated gas supplied from the compressed gas supplying pipe 5', nozzle 25' and tubular guide means 26'. According to the apparatus of this embodiment, the entry and exit doors of the furnace are opened every 1.5 - 2.0 minutes and the work items are introduced into the furnace chamber by the synchronous movement of the conveyor belt by approx. 130 cm. After finishing two heating steps, the work item is sent out of the furnace. When the conveyor belt stops, both entrance and exit doors are closed in synchronism, the heated gas is supplied to the spot heating means 4 from the selected compressed gas supplying pipe 5 and the heated gas is spouted from the nozzle 25. The gas spouting energy is used to lead the flow of surrounding heated gas to the particular target portion to heat it locally. The heated gas produced by the burner of the hot gas supplying section 2 is mixed with the exhaused gas (cooled down) transferred from the furnace body 1. Then the mixed gas is conveyed to the high temperature gas chamber 15 through the main air transfer duct 123.

The gas entered in the high temperature gas chamber 15 flows downward to the heating chamber 17 and thereafter transferred to the low temperature gas chamber 16 at the bottom. The exhausted gas from the low temperature gas chamber 16 passes through the main exhaust gas duct 232 and reenters into the combustion chamber 21. Thus, the heated gas is circulated. Some amount of hot gas leaks from doors 12, 13 of the furnace and the like. Fresh air corresponding to the leaked amount of gas is supplied to the furnace to promote combustion by the burner. The heating apparatus of the present invention can heat the entire configurations of the work item by a blast of hot gas. In addition, since the spot heating means is provided, the particular portion of the work item can be heated efficiently. Accordingly, the heating apparatus of the present invention is suitable to heat a work item of which particular portion need to be heated by high temperature or a work item for which uniform heating is not available in a normal furnace because of its complicated shape and uneven thickness.

Also since the compressed gas necessary for spot heating is not required to be heated, a normal compressed pump or air compressor can be used, without any necessity of special equipment. Thus the heating apparatus of the present invention is particularly intended for practical use.

## Claims

1. A heating apparatus comprising a chamber means (14, 15, 16, 17) completely filled with a heated gas supplied by circulation means (21, 22, 233, 234) to heat the entire work item (31, 32), wherein at least one compressed gas supplying pipe (5) comprising at least one spot heating means (4) extends into said chamber (17) and in that a blast of compressed gas is directed onto a portion of the work item (31, 32) by nozzle means (25), said nozzle means (25) being surrounded concentrically by guide means (26) directing the heated gas onto the portion of the work item (31, 32).

2. A heating apparatus according to claim 1, **characterized in that** said compressed gas supplying pipe (5) is provided with a means permitting control of the amount of supplied compressed gas.

3. A heating apparatus according to claim 1, **characterized in that** a guide member (37) is placed at a predetermined position with regard to the work item to lead the heated gas form said spot heating means (4) in the given direction.

4. A heating apparatus according to claim 1, **characterized in that** said nozzle means (25) is movably connected to said compressed gas supplying means (5) in such a manner that angle and location of said nozzle means (25) are freely adjustable so as to discharge compressed gas in the form of said directed blast and guide the heated gas in a predetermined direction.

5. A heating apparatus according to claim 1, **characterized in that** said compressed gas supplying means (5) and said nozzle means (25) are connected by a flexible tube.

6. A heating apparatus according to claim 1, **characterized in that** said nozzle means (25) are aligned such that the flow direction of the compressed gas extends substantially transversely to the flow direction of the heated gas.

7. A method for heating work pieces according to claim 1, **characterized in that** the compressed gas has a temperature lower than that of the heated gas.

**Revendications**

1. Appareil de chauffage, comprenant un moyen de chambre (14,15,16,17), entièrement rempli d'un gaz chauffé amené par des moyens de circulation (21,22,233,234), pour chauffer la pièce entière à travailler (31,32), dans lequel au moins une conduite d'amenée de gaz comprimé (5), comprenant au moins un moyen de chauffage ponctuel (4) s'étend dans ladite chambre (17), un jet de gaz comprimé étant dirigé sur une partie de la pièce (31,32), par des moyens de buse (25), les moyens de buse (25) étant entourés concentriquement d'un moyen de guidage (26) qui dirige le gaz chauffé sur la partie de la pièce (31,32).

2. Appareil de chauffage selon la revendication 1, caractérisé en ce que ladite conduite d'amenée de gaz comprimé (5) est équipée d'un moyen permettant une commande de la quantité de gaz comprimé.

3. Appareil de chauffage selon la revendication 1, caractérisé en ce qu'un organe de guidage (37) est placé en un emplacement prédéterminé, par rapport la pièce, pour diriger le gaz du moyen de chauffage ponctuel (4) dans une direction prédéterminée.

4. Appareil de chauffage selon la revendication 1, caractérisé en ce que lesdits moyen de buse (25) sont reliés de façon mobile audit moyen d'amenée de gaz comprimé (5), de telle façon que l'angle et l'emplacement desdits moyens de buse (25) soient réglables librement pour refouler du gaz comprimé par ledit jet orienté et le guider dans une direction prédéterminée.

5. Appareil de chauffage selon la revendication 1, caractérisé en ce que ledit moyen d'amenée de gaz comprimé (5) et lesdits moyens de buse (25) sont reliés par un tube flexible.

6. Appareil de chauffage selon la revendication 1, caractérisé en ce que lesdits moyen de buse (25) sont alignés de façon que la direction d'écoulement du gaz comprimé s'étende sensiblement transversalement par rapport à la direction d'écoulement des gaz chauffés.

7. Procédé de chauffage de pièces à travailler selon la revendication 1, caractérisé en ce que le gaz comprimé est d'une température inférieure à celle du gaz chauffé.

**Patentansprüche**

1. Heizvorrichtung mit einer Kammeranordnung (14, 15, 16, 17), die von einem Heißgas vollständig ausgefüllt ist, das von Umlauf- bzw. Zirkulationsmitteln (21, 22, 123, 233, 234) zugeführt wird, um das gesamte Werkstück (31, 32) zu erhitzen, wobei mindestens eine Druckgas-Versorgungsleitung (5) mit mindestens einem Punktbeheizungsmittel (4) in die Kammer (17) führt und durch Düsen (25) ein Druckgasstrahl auf einen Abschnitt des Werkstücks (31, 32) gerichtet ist, wobei die Düsen (25) konzentrisch von Führungsmitteln (26) umgeben sind, die das Heißgas auf den Abschnitt des Werkstücks (31, 32) leiten.

2. Heizvorrichtung nach Anspruch 1 **dadurch gekennzeichnet, daß** die Druckgas-Versorgungsleitung (5) mit einer Einrichtung versehen ist, die die Kontrolle der Menge des zugeführten Druckgases erlaubt.

3. Heizvorrichtung nach Anspruch 1 **dadurch gekennzeichnet, daß** ein Führungsbauteil (37) an einer vorbestimmten Stelle mit bezug auf das Werkstück angeordnet ist, um das Heißgas vom Punktbeheizungsmittel (4) in die vorgegebene Richtung zu leiten.

4. Heizvorrichtung nach Anspruch 1 **dadurch gekennzeichnet, daß** die Düsen (25) beweglich mit der Druckgas-Versorgungsleitung (5) derart verbunden sind, daß Winkel und Ausrichtung der Düsen (25) frei einstellbar sind, um das Druckgas in der Form des gerichteten Strahls auszustoßen und das Heißgas in einer vorbestimmten Richtung zu führen.

5. Heizvorrichtung nach Anspruch 1 **dadurch gekennzeichnet, daß** die Druckgas-Versorgungsleitung (5) und die Düsen (25) durch ein flexibles Rohr verbunden sind.

6. Heizvorrichtung nach Anspruch 1 **dadurch gekennzeichnet, daß** die Düsen (25) so ausgerichtet sind, daß die Strömungsrichtung des Druckgases im wesentlichen quer zur Strömungsrichtung des Heißgases verläuft.

7. Verfahren zur Erhitzung von Werkstücken nach Anspruch 1, **dadurch gekennzeichnet, daß** die Temperatur des Druckgases niedriger ist als die Temperatur des Heißgases.

F I G.1

F I G.2

FIG.3

FIG.4

FIG.5

FIG.6

FIG.7 (Prior Art)

FIG.8 (Prior Art)

FIG.9 (Prior Art)

FIG.10 (Prior Art)

FIG.11 (Prior Art)

9